# EUROPEAN PATENT APPLICATION

(11) **EP 4 552 474 A1**
(43) Date of publication of application: **14.05.2025**
(21) Application number: 23209272.6
(22) Date of filing: 10.11.2023
(51) Int. Cl.: A01F 12/44

(54) **GRAIN CLEANING SYSTEM WITH SIDE-SHAKE**

(71) Applicant: CNH Industrial Belgium N.V., 8210 Zedelgem (BE)
(72) Inventor: BENOOT, Robin, 8210 Zedelgem (BE); BAILLIU, Stijn, 8210 Zedelgem (BE); VANDERSTICHELE, Michiel, 8210 Zedelgem (BE); DEPRAUW, Jonas, 8210 Zedelgem (BE); CURTIS, Hillen, 8210 Zedelgem (BE)
(74) Representative: CNH Industrial IP Department

(57) **Abstract**

The grain cleaning system comprises a support frame (20) and a sieve assembly mounted between two sidewalls (21a,21b) of the frame. The grain cleaning system is configured to undergo fore-aft shaking movements and side-shaking movements. A rubber bushing is mounted between the rotary bearing and the drive arm and/or between the rotary bearing and the eccentric drive, whereby the rubber bushing is configured to have the drive arm undergo a least partially the side-shaking movement.

## Description

### Field of the Invention

The present invention is related to grain cleaning systems as applicable in a combine harvester.

### State of the art

Combine harvesters comprise a cleaning system including a sieve assembly for separating grain kernels from crop residue material. The sieve assembly usually comprises a grain pan and one or more sieves mounted on a support frame. The grain pan and the sieves are subjected via drive arms of an actuating mechanism to a fore-aft shaking movement relative to the support frame, preferably with a sideshaking movement superposed thereon which enables redistribution of the crop over the width of the cleaning system in case the distribution of crop over the width of the cleaning system is not constant, but for example shifted to one side, which can happen when harvesting on a slope, when the crop intake is not over the full width of the header or in case of a single axial rotor combine, when the rotor output tends to be asymmetric. The grain pan and the sieves are suspended from the frame by pivotable support arms referred to also a rocking arms. Both the drive arms and the rocking arms undergo a fore-aft rocking movement under the influence of the actuating mechanism. To accommodate the sideshaking movement, the drive arms and/or rocking arms are coupled with bearings that allow swivelling, like spherical bearings, or the drive arm or rocking arm comprises two linkages whereby the coupling between the two linkages accommodates the swivelling. However, both solutions are not satisfactory. Spherical bearings are considerably not only more expensive, but often also wear out more quickly and/or need more maintenance, because they more difficult to seal and the interior of a combine is a harsh environment with a lot of dust and heat. Using two linkages with a coupling is more complex and requires considerable more space. What is needed is a more simple solution that overcomes these problems.

### Summary of the invention

The invention is related to a grain cleaning system for a combine harvester, and to a combine harvester as described in the appended claims.

According to the invention, the grain cleaning system comprises a support frame and a sieve assembly mounted between two sidewalls of the frame. The sieve assembly comprises a plurality of components including one or more sieves, configured to undergo fore-aft shaking movements in a direction substantially parallel to the sidewalls and lateral shaking movements in a direction substantially orthogonal to the sidewalls. The grain cleaning system further comprises a first actuating mechanism configured to drive said fore-aft shaking movements, and comprises one or more drive arms coupled to one or more components of the sieve assembly, wherein the drive arms are coupled to the respective components of the sieve which are thereby configured to undergo the same fore-aft movements as said respective components, and wherein the one or more drive arms are coupled to an eccentric drive of the first actuating mechanism with rotary bearings. The grain cleaning assembly further comprises a second actuating mechanism configured to superpose a side-shaking movement relative to the support frame, onto the fore-aft shaking movement of the one or more components of the sieve assembly. The grain cleaning system also comprises a plurality of rocking arms having two ends and coupled at one end to the support frame and at the other end to a component of the sieve assembly for supporting said component while enabling it to perform fore-aft and lateral shaking movements. According to the invention, a rubber bushing is mounted between the rotary bearing and the drive arm and/or between the rotary bearing and the eccentric drive, whereby the rubber bushing is configured to have the drive arm undergo a least partially the side-shaking movement of the component of the sieve assembly the drive arm is coupled to.

According to another aspect of the invention, a combine harvester with a such a grain cleaning system is also claimed.

### Brief description of the figures

Figure 1 is a conceptual side view of a combine harvester as known in the prior art.
Figure 2 shows part of a grain cleaning system comprising a drive arm mounted with a rubber bushing around a roller bearing onto the eccentric drive in accordance with an embodiment of the invention.
Figure 3 is a detailed view of figure 2.

### Detailed description of preferred embodiments of the invention

Preferred embodiments will now be described with reference to the drawings. The detailed description is not limiting the scope of the invention, which is defined only by the appended claims.

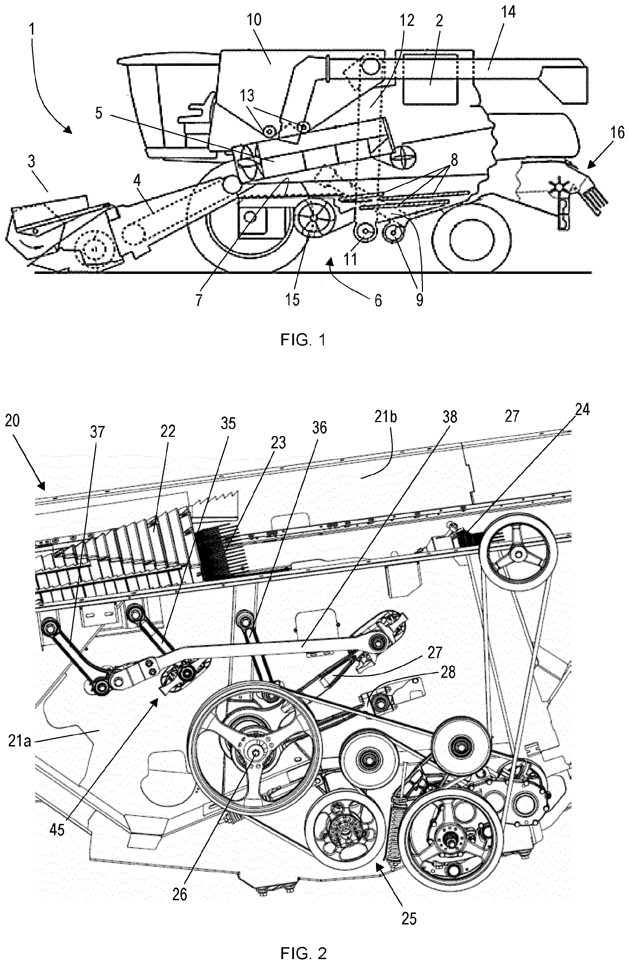

With reference to Figure 1, a combine harvester 1 as presently known in the art includes an engine 2, a header 3 for cutting crops from the field, and for gathering the crops towards the inlet of a feeder 4. The feeder delivers the crops to one or two threshing rotors 5 which separate larger crop material from grains and smaller residue. Longitudinally mounted threshing rotors may be applied as shown in the drawing, but transversely mounted rotors are equally possible.

The cleaning system 6 of the harvester includes a sieve assembly comprising a grain pan 7 and a plurality of sieves 8 for separating grains from the smaller residue. Insufficiently separated crop material, also called tailings, is transported back to the cleaning system, possibly after rethreshing, by the tailings augers 9. Fully separated grains are collected in a grain tank 10 through the combined action of a clean grain auger 11 and a grain elevator 12. From the tank 10, the grains may be evacuated from the harvester through further augers 13 at the bottom of the grain tank and through a pivotable spout 14. Small crop residue, also referred to as chaff, is blown towards the rear of the harvester by a cleaning fan 15. Larger crop residue such as crop stalks and leaves is moved to a chopper and spreader assembly 16, where it may be cut into smaller particles and spread out across a wide swath behind the advancing combine.

As stated in the introduction, the grain pan 7 and the sieves 8 are coupled to a drive mechanism, not shown in Figure 1 but known as such, configured to actuate fore-aft shaking movements to the components of the sieve assembly. Typically, the grain pan 7 is configured to shake in counterphase relative to one of the sieves 8. Additionally, but not shown in Figure 1, there is also a drive mechanism to superpose side-shaking movements.

The invention is not limited to the particular configuration shown in Figure 1 which is intended only to sketch the context to which the invention is applicable. The invention is in fact applicable to any sieve assembly including fore-aft shaking and side-shaking cleaning components.

Figure 2 shows part of one side of a grain cleaning system of a combine harvester in accordance with an embodiment of the invention. The system includes a support frame 20 comprising left and right sidewalls 21a and 21b. The support frame is fixed to the chassis of the combine (not shown). The system further includes a grain pan 22, an upper sieve and a lower sieve (the sieves are hidden behind the left sidewall 21a of the support frame). The grain pan 22 and the sieves are moveably mounted between the two sidewalls, wherein the movements of these components include at least fore-aft shaking movements, i.e. cyclically alternating movements going back and forth in a direction essentially parallel to the sidewalls 21a and 21b. The grain pan 22 and the upper sieve are also capable of undergoing a side-shaking movement superposed on the fore-aft shaking movement.

The cleaning system comprises an actuating mechanism 25 for driving the fore-aft shaking movements of the cleaning components. In the embodiment shown, the actuating mechanism includes a belt-operated system for driving the rotation of a transverse shaft 26, and eccentrically coupled drive arms 27,28 so that the drive arms perform a fore-aft shaking movement when the transverse shaft 26 rotates. The movements of arms 27 and 28 are in counterphase due to the relative placement of the eccentric couplings on the transverse shaft 26. The opposite ends of the drive arms are coupled respectively to the upper sieve and the lower sieve, which are suspended from the frame by rocking arms. The image shows one rocking arm 35 supporting the upper sieve, one rocking arm 36 supporting the lower sieve and one rocking arm 37 supporting the grain pan. The other rocking arms on the side of the left sidewall 21a are outside the image, while mirrored versions of the various arms are present also on the other side of the support frame 20. The fore-aft movement of the drive arms 27 is transferred to the rocking arms 37 of the grain pan by a connection arm 38. The upper sieve and the grain pan 22 are thereby moving in phase, whereas the lower sieve moves in counterphase to said two components due to the relative placement of the respective eccentric couplings of the drive arms 27,28.

The drive arms 27, 28 and the rocking arms 35-37 (on both sides of the frame 20) are located adjacent and outside of the left and right sidewall 21a and 21b of the support frame 20, and these arms are coupled to the sieves and the grain pan by shafts passing through respective openings in the sidewalls of the frame, which openings are large enough to allow the fore-aft movement of the shafts.

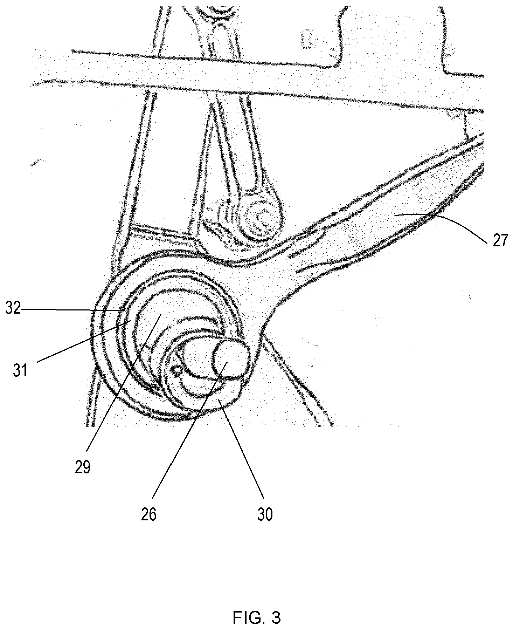

Figure 3 shows a detail of figure 2, more precisely how the drive arm 27 is driven. The transverse shaft 26 has an eccentric 29. This eccentric can be an integral part of the shaft 26 or a separate part mounted onto the shaft 26. A balancing part 30 is present to reduce vibrations, but this is not necessarily part of the invention. On the eccentric 29, a bearing 31 is mounted. The eccentric 29 will drive the fore-aft motion. The bearing 31 is shown in figure 3 in a simplified way, as a ring.

The bearing 31 may be a roller bearing, like a ball bearing, for example a deep groove ball bearing or a four-point contact ball bearing, like a cylindrical roller bearing or a spherical roller bearing. The roller bearing may be a single row or double row bearing. Preferably a sealing is present to protect the bearing from dust and dirt. Alternatively, the bearing 31 may be a rotary sliding bearing, for example made of low friction materials.

Around the bearing, a rubber bushing 32 is mounted. Within the drive arm 27, a housing is machine wherein the bushing 32 can be mounted. The bushing can be press fitted into the housing in the drive arm 27 or can be fixed in any other well known way. Also the bearing 31 can be press fitted into the rubber bushing.

Preferably, the rubber bushing consists of an inner and outer metal ring, whereby in between both rings rubber is present. Such a bushing can be produced by vulcanizing rubber together with the metal rings in a suitable mould. The metal rings facilitate assembly and disassembly. Preferably the rubber is precompressed between the metal rings. Precompression reduces the risk of damage to the rubber bushing as it is being loaded during use. It is also possible to use the outer ring, respectively inner ring, of the bearing as the inner, respectively outer ring of the rubber bushing, and directly vulcanize the rubber of the rubber bushing onto the bearing ring.

Whereas Figure 3 shows the rubber bushing 32 mounted around the bearing 31, so in between the bearing 31 and the housing in the drive arm 27, it is also possible to mount the rubber bushing on the eccentric 29, and to mount the bearing 31 over the rubber bushing 32.

It is also possible to use two rubber bushings, one between the bearing and the housing in the drive arm, and one between the bearing and the eccentric.

Preferably the rubber bushing 32 is as wide or preferably even somewhat wider than the width of the bearing 31, for a strong fit of the bearing 31 in or around the rubber bushing 32.

The rubber of the rubber bushing 32 should be strong but also somewhat flexible to accommodate the out of plane movement of the drive arm 27, whereby out of plane refer to the plane of the bearing 31. It was found that a shore A hardness of in between 70 and 80 works best for this application.

Also the thickness of the bushing, measured as the difference between the outer and inner diameter divided by two, should be preferably somewhat smaller than the thickness of the bearing, measured in the same way.

Whereas the bearing 31 allows the drive arm to freely rotate as it is being driven by the eccentric and so can transfer the fore-aft motion from the eccentric 29 to the sieves and/or grain pan, the rubber bushing 32 allows out of plane movement of the drive arm, whereby out of plane refer to the plane of the bearing 31, so orthogonal to the transverse shaft 26, as the side-shake movement is superposed onto the fore-aft movement. The magnitude and/or frequency of the side-shake movement will vary depending on the needs, but the rubber bushing will accommodate it, without the need for a more complex bearing, like a spherical bearing, or more complex linkage system.

Rubber bushings may be also used where the drive arm is coupled to the eccentric, but can also be used where the drive arm is coupled to the cleaning components, like the sieves or grainpan. The advantage of using rubber bushings on both ends where the drive arm is coupled, one end to the eccentric and one end to the cleaning component, is that the out of plane movement that needs to be accommodated will be distributed over two rubber bushings, reducing the necessary amount of flexing that the rubber bushing needs to handle.

Whereas the use of a rubber bushing in combination with a rotary bearing to accommodate the out of plane movement due to the side-shake has been described, one may also use a rubber bushing in combination with a rotary bearing for the rocking arms.

The use of a rubber bushing in combination with a rotary bearing in the cleaning system as above described is a simple and compact solution to integrate side-shake in the cleaning system, overcoming the more complex solutions in use today.

## Claims

1. A grain cleaning system, comprising :
- a support frame (20), comprising two opposing sidewalls (21a,21b),
- a sieve assembly mounted at least partly between said opposing sidewalls, the sieve assembly comprising a plurality of components including one or more sieves, configured to undergo fore-aft shaking movements in a direction substantially parallel to the sidewalls (21a,21b) and lateral shaking movements in a direction substantially orthogonal to the sidewalls (21a, 21b),
- a first actuating mechanism (25) configured to drive said fore-aft shaking movements, said mechanism (25) comprising one or more drive arms (27,28) coupled to one or more components of the sieve assembly, wherein the drive arms (27, 28) are coupled to the respective components of the sieve which are thereby configured to undergo the same fore-aft movements as said respective components, and wherein the one or more drive arms (27, 28) are coupled to an eccentric drive (29) of the first actuating mechanism (25) with rotary bearings (31),
- a second actuating mechanism configured to superpose a side-shaking movement relative to the support frame (20), onto the fore-aft shaking movement of the one or more components of the sieve assembly
- a plurality of rocking arms (35-37) having two ends and coupled at one end to the support frame (20) and at the other end to a component of the sieve assembly for supporting said component while enabling it to perform fore-aft and lateral shaking movements,
**characterised in that** a rubber bushing (32) is mounted between the rotary bearing (31) and the drive arm and/or between the rotary bearing (31) and the eccentric drive (29), whereby the rubber bushing (32) is configured to have the drive arm (27, 28) undergo a least partially the side-shaking movement of the component of the sieve assembly the drive arm is coupled to.

2. A grain cleaning system according to claim 1, whereby the rotary bearing (31) is a roller bearing.

3. A grain cleaning system according to claim 1 or 2, whereby the shore A hardness of the rubber in the rubber bushing (32) is between 70 and 80.

4. A grain cleaning system according to claim 1, 2 or 3, whereby the rubber bushing (32) is concentric with the rotary bearing (31).

5. A grain cleaning system according to claim 4, whereby the rubber bushing (32) is ring shaped.

6. A grain cleaning system according to claim 5, whereby the rubber bushing (32) is wider than the rotary bearing (31).

7. A grain cleaning system according to claim 5 or 6, whereby the difference between the outer and inner diameter of the rubber bushing (32) is smaller than the difference between the outer and inner diameter of the rotary bearing (31).

8. A grain cleaning system according to any one of the claims 4 to 6, whereby the rubber bushing (32) comprises an inner and outer metal ring with rubber inbetween.

9. A grain cleaning system according to claim 8, whereby the rubber in the rubber bushing (32) is precompressed between the inner and outer metal ring.

10. A grain cleaning system according to claim 8 or 9, whereby one of the metal rings of the bushing (32) is a ring of the bearing (31).

11. A grain cleaning system according to any one of the preceding claims, whereby there is a first rubber bushing (32) between the drive arm and the rotary bearing (31) and a second rubber bushing between the rotary bearing (31) and the eccentric drive (29).

12. A grain cleaning system according to any one of the preceding claims, whereby the coupling between the drive arm and the component of the sieve assembly comprises a rubber bushing.

13. A grain cleaning system according to any one of the preceding claims, whereby the coupling of at least one rocking arm at an end to the support frame and/or to the component of the sieve assembly comprises a rubber bushing.

14. A combine harvester comprising a grain cleaning system according to any one of the preceding claims.
